# EUROPEAN PATENT APPLICATION

(11) **EP 4 566 753 A1**
(43) Date of publication of application: **11.06.2025**
(21) Application number: 22954119.8
(22) Date of filing: 16.11.2022
(51) Int. Cl.: B23Q 15/013, B23Q 15/08, B23Q 17/22, G05B 19/416

(54) **PROCESS CONTROL DEVICE FOR PROCESSED CHIP SEGMENTATION AND CONTROL METHOD THEREOF**

(30) Priority: 02.08.2022 KR 20220096058
(71) Applicant: Hanwha Precision Machinery Co., Ltd., Changwon-si, Gyeongsangnam-do 51552 (KR)
(72) Inventor: BYEON, Cheol Hong, Changwon-si, Gyeongsangnam-do 51552 (KR)
(74) Representative: Gulde & Partner
(86) International application number: PCT/KR2022/018038
(87) International publication number: WO 2024/029664

(57) **Abstract**

A process control device for processed chip segmentation, according to an embodiment of the present invention, discriminates an acceleration section in a pre-control algorithm transformed into a sine-wave form through the speed of a tool, and rapidly increases feed in the acceleration section in a linear form and smoothly decreases the feed in a deceleration section in a sine-wave form, thereby separating and dualizing the sections for acceleration and deceleration for chip segmentation, so that different control algorithms can be applied thereto. In addition, the process control device for processed chip segmentation can be variously implemented according to embodiments.

## Description

### [Technical Field]

The present disclosure relates to a process control device for cutting chip segmentation and method thereof capable of realizing optimized processing time and roughness by applying different control algorithms to instantaneous acceleration and deceleration of speed changes for chip breaking according to the characteristics of the acceleration and deceleration.

### [Background Art]

An automatic lathe can reduce processing cycle time by simultaneously processing left and right sides and a front side of a workpiece while the workpiece is chucked on a main spindle and guided by a guide bush.

In addition, the automatic lathe is a device made suitable for mass production as it automatically performs most of the preparation, processing, and finishing processes from material input to production and finished product discharge.

The existing processing method of the automatic lathe cutting chip segmentation during processing, and if the chips are too long or discharged in a wrong direction, they may be wrapped around a workpiece or cause scratches on the workpiece, thus causing problems in processing an intended shape. To solve the problem of chips being wrapped around the workpiece or causing scratches on the workpiece due to these machining chips, there are generally two solutions, one through a tool and the other through a control algorithm. The solution through a tool can segments chips or facilitate chip control by optimizing the chip breaker shape of a cutting tool for each tool maker. On the other hand, the solution through a control algorithm can segments chips or facilitate chip control by programming a path for cutting chip segmentation in consideration of a processing path.

In the above control methods for cutting chip segmentation, a tool mounted on a tool rest segments cutting chip by rapidly repeating switching between forward and backward directions along a processing path during processing. Accordingly, the tool rest on which the tool is mounted vibrates, and the roughness of the surface of a workpiece deteriorates compared with a conventional cutting method. In addition, the vibrations generated in the tool rest provide continuous stress to equipment, which can cause a reduction in the overall durability of each equipment as well as the tool rest.

In addition, when chips are segmented through instantaneous direction changes, cutting chip segmentation is possible, but roughness is bound to deteriorate. When chips are segmented through speed changes, roughness is relatively improved, but processing time increases. That is, when speed is reduced through speed changes, the overall processing time is bound to increase because deceleration from command speed is continuously applied, even though it is an instantaneous time. Conversely, if the cutting speed is increased from the command speed to reduce the processing time, it may be difficult to obtain a desired shape of roughness.

### (Related Art Document)

Korean Patent Publication No. 10-2021-0113158 (public date 2021.09.15).

### [Disclosure]

### [Technical Problem]

Aspects of the present disclosure provide Process control device for cutting chip segmentation and method thereof, the device and method capable of realizing optimized processing time and roughness by applying different control algorithms to instantaneous acceleration and deceleration of speed changes for chip breaking according to the characteristics of the acceleration and deceleration.

Aspects of the present disclosure also provide process control device for cutting chip segmentation and method thereof, the device and method applying a control algorithm in the form of rapid acceleration during acceleration in order to reduce processing time and applying a smoothing control algorithm based on mathematical calculations during deceleration in order to minimize the impact on product roughness in consideration of the fact that deceleration has a greater impact on product roughness than acceleration in actual processing tests.

Aspects of the present disclosure also provide process control device for cutting chip segmentation and method thereof, the device and method capable of reducing processing time because an increase in processing speed does not greatly affect roughness.

However, aspects of the present disclosure are not restricted to the one set forth herein. The above and other aspects of the present disclosure will become more apparent to one of ordinary skill in the art to which the present disclosure pertains by referencing the detailed description of the present disclosure given below.

### [Technical Solution]

According to an aspect of the present disclosure, there is provided a process control device for cutting chip segmentation,
determining an acceleration section in a pre-control algorithm converted into a sine waveform through the speed of a tool,
applying different control algorithms to each of the acceleration section and the deceleration section by separating the acceleration section and a deceleration section for cutting chip segmentation by rapidly increasing a feed in a linear form in the acceleration section, and smoothly reducing the feed in a sine waveform in the deceleration section.

The process control device for cutting chip segmentation includes a calculation unit comprising one or more control elements for machined chip breaking;
a control unit producing a result value calculated through a calculation algorithm according to the control elements of the calculation unit; and
a driving unit providing driving force for transporting a tool through the result value produced by the control unit.

The process control device for cutting chip segmentation includes, wherein the control unit separates the acceleration section and the deceleration section and implements a control algorithm completed for chip breaking from the pre-control algorithm implemented according to the driving of the tool.

The process control device for cutting chip segmentation includes, wherein the control unit comprises:
a deceleration control unit implementing a deceleration algorithm using a smoothing operation calculated through a rotation speed input value of the tool and an NC operation sampling cycle and controlling the feed in the deceleration section to be smoothed and reduced in the sine waveform; and
an acceleration control unit controlling the feed in the acceleration section to rapidly increase in the linear form by rapidly accelerating to a speed standard set in the control algorithm.

The process control device for cutting chip segmentation includes, wherein the control unit further comprises:
a speed control unit controlling a speed standard set in an algorithm according to a mode of use set by a user to be output; and
a stop control unit calculating a stop time for chip breaking by calculating the time required to stop one rotation according to a spindle rotation speed of the tool.

The process control device for cutting chip segmentation includes, wherein for machined chip breaking, the calculation unit comprises one or more control elements corresponding to the speed control unit, the deceleration control unit, and the stop control unit, respectively.

The process control device for cutting chip segmentation includes, wherein the control elements of the calculation unit comprise:
a speed calculation module implementing calculations through a speed setting and a mode setting of the tool and applying the calculation result to the speed control unit;
a deceleration calculation module implementing calculations through the spindle rotation speed of the tool and the NC operation sampling cycle and applying the calculation result to the deceleration control unit; and
a stop calculation module implementing calculations through the spindle rotation speed and stop setting of the tool and applying the calculation result to the stop control unit.

The process control device for cutting chip segmentation includes, wherein the acceleration control unit and the deceleration control unit are separated for machined chip breaking to implement the pre-control algorithm in the sine waveform as a control algorithm in a half-sine waveform in the acceleration section and the deceleration section of the tool for chip breaking.

The process control device for cutting chip segmentation includes, wherein in the control algorithm in the half-sine waveform, and the driving of the tool is stopped or a waveform having a predetermined speed value is formed in the stop section of the tool depending on a stop setting applied to the stop control unit.

The process control device for cutting chip segmentation includes, wherein the deceleration control unit obtains the sine waveform of the feed by converting a triangular wave implemented.

The process control device for cutting chip segmentation includes, wherein the acceleration control unit obtains the linear form of the by removing the sine waveform.

The process control device for cutting chip segmentation includes, further comprising a correction unit receiving a result value produced by the control unit and applying the result value to the driving unit,
wherein the correction unit receives the result value produced by the control unit and corrects the result value, and the result value corrected by the correction unit is sent to the driving unit and additionally reflected in the driving unit to adjust the driving of the driving unit.

According to an aspect of the present disclosure, there is provided a process control method for cutting chip segmentation, includes,
applying different control algorithms to each of the acceleration section and the deceleration section by separating an acceleration section and a deceleration section for cutting chip segmentation,
forming a pre-control algorithm of a sine waveform through the speed of the tool;
determining the acceleration section in the pre-control algorithm;
if determined to be the acceleration section, rapidly increasing the feed in a linear form in the acceleration section;
smoothly decreasing the feed in a sine-waveform in the deceleration section; and
calculating the optimal stop time required for chip breaking by receiving the rotational value of the tool.

The process control method for cutting chip segmentation includes, wherein the control algorithm completed form the acceleration section and the deceleration section during the processing of the tool is formed in the shape of a half-sine waveform.

The process control method for cutting chip segmentation includes, wherein the sine waveform is obtained by converting from a triangular wave implemented through the speed of the tool.

The process control method for cutting chip segmentation includes, wherein the acceleration section is obtained by rapidly increasing the feed in a linear by removing the sine waveform.

The process control method for cutting chip segmentation includes, wherein forming of the pre control algorithm,
the driving of the tool stops or has a waveform with a predetermined speed value during the stop section of the tool.

The process control method for cutting chip segmentation includes, wherein the step of forming the pre control algorithm further comprises;
calculating and deriving the optimal stop time required for chip breaking by receiving the rotational value of the tool inputted form the sine waveform of the pre-control algorithm between the acceleration section and the deceleration section.

The process control method for cutting chip segmentation includes, wherein the acceleration section and the deceleration section are separated and dualized to implement, implements a control algorithm shape of a half-sine waveform completed for chip breaking from the pre-control algorithm implemented according to the driving of the tool, comprising; the control unit comprising; a deceleration control unit controlling the feed in the deceleration section to be smoothed and reduced in the sine waveform, and an acceleration control unit controlling the feed in the acceleration section to rapidly increase in the linear form; and
wherein for cutting chip segmentation, the calculation unit comprises one or more control elements corresponding to the speed control unit, the deceleration control unit, and the stop control unit, respectively.

The process control method for cutting chip segmentation includes, wherein the control elements of the calculation unit comprise:
a speed calculation module implementing calculations through a speed setting and a mode setting of the tool and applying the calculation result to the speed control unit;
a deceleration calculation module implementing calculations through the spindle rotation speed of the tool and the NC operation sampling cycle and applying the calculation result to the deceleration control unit; and
a stop calculation module implementing calculations through the spindle rotation speed and stop setting of the tool and applying the calculation result to the stop control unit.

The process control method for cutting chip segmentation includes, further comprising applying a transfer feed of the tool corresponding to the control algorithm to drive the tool after forming the control algorithm shape of the half-sine waveform control algorithm completed of the acceleration section, the deceleration section, and the stop section.

Other details of the present disclosure are included in the detailed description and the drawings.

### [Advantageous Effects]

A process control device for cutting chip segmentation and method thereof according to an embodiment of the present disclosure can realize optimized processing time and roughness by applying different control algorithms to instantaneous acceleration and deceleration of speed changes for chip breaking according to the characteristics of the acceleration and deceleration.

In addition, process control device for cutting chip segmentation and method thereof according to an embodiment of the present disclosure apply a control algorithm in the form of rapid acceleration during acceleration in order to reduce processing time and apply a smoothing control algorithm based on mathematical calculations during deceleration in order to minimize the impact on product roughness in consideration of the fact that deceleration has a greater impact on product roughness than acceleration in actual processing tests. Therefore, the device and method can realize optimized processing time and roughness and can reduce processing time because an increase in processing speed does not greatly affect roughness.

In addition, process control device for cutting chip segmentation and method thereof according to an embodiment of the present disclosure apply a waveform for variable deceleration rather than complete deceleration to a specific material such as aluminum because the specific material such as aluminum is broken even when speed is reduced to a certain extent rather than a complete stop in a stop section during chip breaking. Therefore, it is possible to reduce processing time while additionally improving material roughness because small vibrations are applied.

However, the effects of the present disclosure are not limited to the aforementioned effects, and various other effects are included in the present specification.

### [Description of Drawings]

FIG. 1 is a schematic configuration diagram of a process control device for cutting chip segmentation according to an embodiment of the present disclosure.
FIG. 2 is a graph schematically illustrating a half-sine waveform control algorithm of the process control device for cutting chip segmentation according to the embodiment of the present disclosure.
FIG. 3 is a graph schematically illustrating another embodiment of the half-sine waveform control algorithm of the process control device for cutting chip segmentation according to the embodiment of the present disclosure.
FIG. 4 is a schematic flowchart illustrating a process control method for cutting chip segmentation according to an embodiment of the present disclosure.
FIG. 5 is a detailed flowchart illustrating the process control method for cutting chip segmentation according to the embodiment of the present disclosure.

### (Description of Numbers)

100: process control device
110: calculation unit
112: speed calculation module
112a: speed setting factor
112b: mode setting factor
113: deceleration calculation module
113a: main spindle rotation speed
113b: smoothing operation time constant
113c: NC operation sampling cycle
114: stop calculation module
114a: main spindle rotation speed
114b: stop setting factor
120: control unit
121: acceleration control unit
122: speed control unit
123: deceleration control unit
124: stop control unit
130: driving unit
140: correction unit

### [Mode for Invention]

Advantages and features of the disclosure and methods to achieve them will become apparent from the descriptions of exemplary embodiments herein below with reference to the accompanying drawings. However, the inventive concept is not limited to exemplary embodiments disclosed herein but may be implemented in various ways. The exemplary embodiments are provided for making the disclosure of the inventive concept thorough and for fully conveying the scope of the inventive concept to those skilled in the art. It is to be noted that the scope of the disclosure is defined only by the claims. Like reference numerals denote like elements throughout the descriptions.

Accordingly, in some embodiments, well-known process steps, well-known structures, and well-known techniques are not specifically described to avoid ambiguity in interpreting the present invention.

Terms used herein are for illustrating the embodiments rather than limiting the present disclosure. As used herein, the singular forms are intended to include plural forms as well, unless the context clearly indicates otherwise. Throughout this specification, the word "comprise" and variations such as "comprises" or "comprising," will be understood to imply the inclusion of stated elements but not the exclusion of any other elements.

Furthermore, the embodiments described in this specification will be explained with reference to cross-sectional views and/or schematic diagrams, which serve as idealized illustrations of the present invention. Accordingly, the shapes depicted in the exemplary drawings may be modified due to manufacturing techniques and/or tolerances. Therefore, the embodiments of the present invention are not limited to the specific forms shown but also include variations in shape that result from the manufacturing process. Additionally, in the drawings of the present invention, each component may be illustrated as being slightly enlarged or reduced in size for the convenience of explanation. Throughout the specification, the same reference numerals refer to the same components.

Hereinafter, exemplary embodiments of the present disclosure will be described in detail with reference to the accompanying drawings.

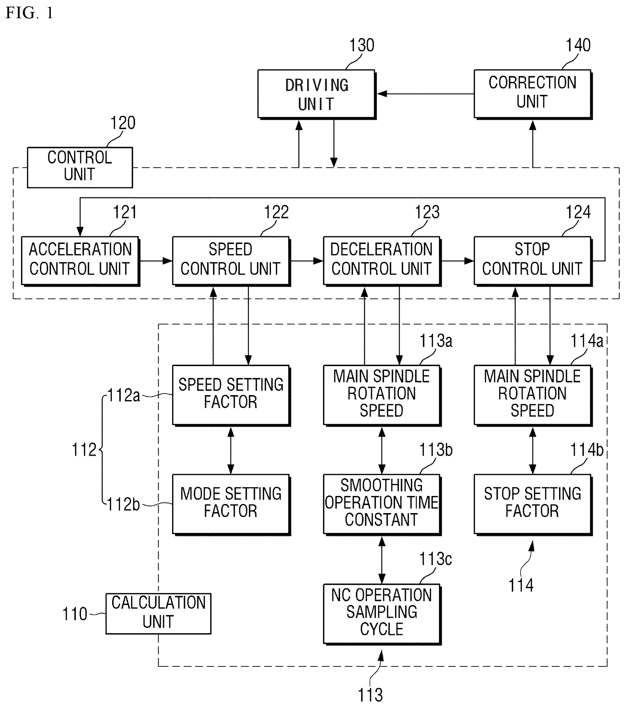

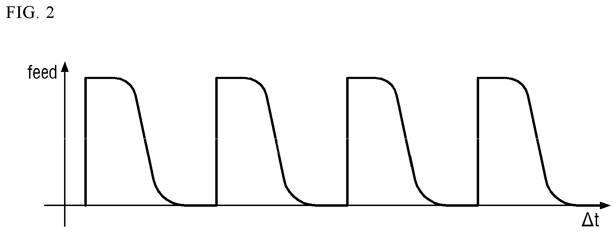

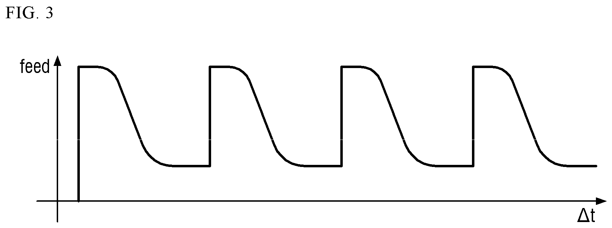

FIG. 1 is a schematic configuration diagram of a process control device for cutting chip segmentation according to an embodiment of the present disclosure. FIG. 2 is a graph schematically illustrating a half-sine waveform control algorithm of the process control device for cutting chip segmentation according to the embodiment of the present disclosure. FIG. 3 is a graph schematically illustrating another embodiment of the half-sine waveform control algorithm of the process control device for cutting chip segmentation according to the embodiment of the present disclosure.

Referring to FIGS. 1 through 3, the process control device 100 for cutting chip segmentation according to the embodiment of the present disclosure may determine an acceleration section through a pre-control algorithm converted into a sine waveform through the speed of a tool. In the pre-control algorithm converted into the sine waveform, the process control device 100 may rapidly increase a feed in a linear form in the acceleration section and may smooth and reduce the feed in a sine waveform in a deceleration section. In this way, the process control device 100 may apply different forms to the acceleration section and the deceleration section, that is, may separate the acceleration section and the deceleration section for chip breaking and apply different control algorithms to the acceleration section and deceleration section.

Specifically, the process control device 100 for cutting chip segmentation according to the embodiment of the present disclosure may include a calculation unit 110, a control unit 120, a driving unit 130, and a correction unit 140.

The calculation unit 110 may include one or more control elements (also referred to as control factors or calculation factors) for cutting chip segmentation. In addition, the control elements of the calculation unit 110 may be connected to the control unit 120 so as to individually apply values to the control unit 120 which will be described later.

The calculation unit 110 may include one or more control elements corresponding to the control unit 120, specifically, respectively corresponding to a speed control unit 122, a deceleration control unit 123, and a stop control unit 124 which will be described later.

Specifically, the calculation unit 110 may include a speed calculation module 112, a deceleration calculation module 113, and a stop calculation module 114.

The speed calculation module 112 may implement calculations through a speed setting factor 112a and a mode setting factor 112b of the tool and apply the calculation result to the speed control unit 122.

That is, the calculation unit 110 may include control elements of a tool speed setting (e.g., speed setting factor 112a) and a mode setting (e.g., mode setting factor 122b) of the tool to facilitate the result calculation of the speed control unit 122. The control elements according to the speed setting factor 112a and the mode setting factor 122b may be applied to the speed control unit 122 which will be described later, and a result value may be calculated through a calculation algorithm of the speed control unit 122.

The deceleration calculation module 113 may implement calculations through a main spindle rotation speed 113a (also referred to as 'spindle rotation speed') of the tool and an NC operation sampling cycle 113c and apply the calculation result to the deceleration control unit 123.

That is, the calculation unit 110 may include the main spindle rotation speed 113a (also referred to as `spindle rotation speed'), the NC operation sampling cycle 113c, and a smoothing operation time constant 113 to facilitate the result calculation of the deceleration control unit. Control elements according to the main spindle rotation speed 113a, the NC operation sampling cycle 113c, and the smoothing operation time constant 113b may be applied to the deceleration control unit 123 which will be described later, and a result value may be calculated through a calculation algorithm of the deceleration control unit 123.

The stop calculation module 114 may implement calculations through a main spindle rotation speed 114a and a stop setting factor 114b of the tool to facilitate the result calculation of the stop control unit 124 and may apply the calculation result to the stop control unit 124.

That is, the calculation unit 110 may include the main spindle rotation speed 114a and the stop setting factor 114b of the tool to facilitate the result calculation of the stop control unit 124. Control elements according to the main spindle rotation speed 114a and the stop setting factor 114b may be applied to the stop control unit 124 which will be described later, and a result value may be calculated through a calculation algorithm of the stop control unit 124.

The control unit 120 may be provided to produce a result value calculated through the calculation algorithm of each control unit 120 in response to values received from the control elements of the calculation unit 110.

The control unit 120 according to an embodiment of the present disclosure may include the speed control unit 122, the deceleration control unit 123, the stop control unit 124, and an acceleration control unit 121.

The speed control unit 122 may produce a result for outputting a speed standard set in a control algorithm according to the mode of use set by a user.

The deceleration control unit 123 may be provided to implement a deceleration algorithm using a smoothing operation calculated through the main spindle rotation speed 113a of the tool and the NC operation sampling cycle 113c of the deceleration operation module 113. That is, the deceleration control unit 123 may produce a result value for smoothing and reducing the feed in a sine waveform in the deceleration section.

The stop control unit 124 may be provided to calculate a stop time for chip breaking by calculating the time required to stop one rotation according to the stop setting factor 114b and the main spindle rotation speed 114a of the tool of the operation control module 114.

The acceleration control unit 121 may control the feed in the acceleration section of the pre-control algorithm to rapidly increase in a linear form by rapidly accelerating to a speed standard produced by the speed control unit 122.

As described above, in the process control device 100 for cutting chip segmentation according to the present disclosure, the control unit 120 is divided into different parts. Therefore, a complete (half-sine waveform) control algorithm for chip breaking can be implemented from a pre-control algorithm implemented according to the driving of a tool. That is, since the acceleration control unit 121 and the deceleration control unit 123 are provided separately in the control unit 120, the acceleration and deceleration of the tool for chip breaking can be implemented through a control algorithm in the form of a half-sine waveform.

The following may specifically describe that forms a pre-control algorithm and a control algorithm completed from the pre-control algorithm.

Specifically, the process control device 100 may implement a triangular wave by checking the speed of the tool, specifically, the spindle. The triangular wave of the tool may be converted into a sine waveform (also referred to as a 'sinusoidal wave') to implement the pre-control algorithm for cutting chip segmentation. When the acceleration section is determined in the pre-control algorithm in the sine waveform, the acceleration control unit 121 may control the feed in the acceleration section of the pre-control algorithm to rapidly increase in a linear form.

That is, the deceleration control unit 123 may obtain the sine waveform of the feed by converting the triangular wave, and the acceleration control unit 121 may obtain the linear form of the feed by removing the sine waveform. Accordingly, a control algorithm in the form of a half-sine waveform can be obtained.

In addition, in the control algorithm in the form of the half-sine waveform, the driving of the tool may be stopped or a waveform having a predetermined speed value may be formed in a stop section of the tool depending on a stop setting applied to the stop control unit 124.

For example, in the control algorithm in the form of the half-sine waveform, a complete stop section in which the feed is zero exists between the deceleration section and the acceleration section. However, depending on the material being cut by the tool, a minimum speed section in which the feed has a predetermined value rather than zero may be provided between the deceleration section and the acceleration section. For example, when chips of a specific material such as aluminum are broken, the section between the acceleration section and the deceleration section in the control algorithm in the form of the half-sine waveform may be formed as an incomplete stop section, that is, a minimum speed section in which the feed has a predetermined minimum value, so that the material can be broken in the minimum speed section. Therefore, when chips of a specific material are broken, a waveform having a predetermined speed in the stop section rather than completely decelerating may be applied. This can reduce processing time and further improve material roughness because small vibrations are applied.

The driving unit 130 may provide driving force for driving the tool. The driving unit 130 may be provided to provide driving force for transporting the tool through a result value produced by the control unit 120.

The correction unit 140 may receive a result value produced by the control unit 120 and apply the result value to the driving unit 130. That is, the driving unit 130 may receive the result value produced by the control unit 120 and may be driven according to an acceleration, deceleration, and stop waveform for chip breaking corresponding to the received result value. In addition, the driving unit 130 may receive the result value corrected by the correction unit 140 after being applied to the correction unit 140 and adjust its driving by additionally reflecting the received result value.

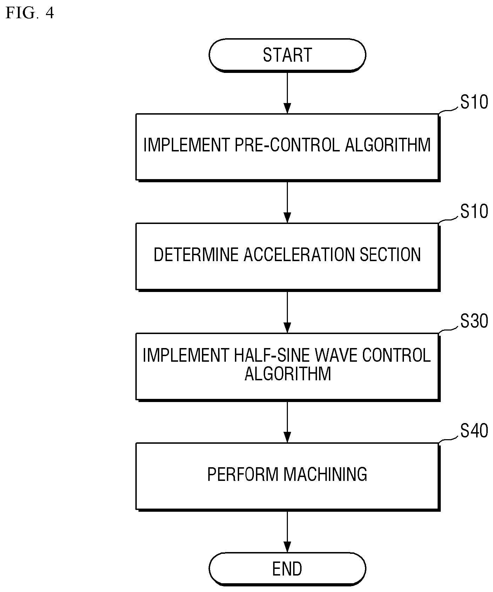

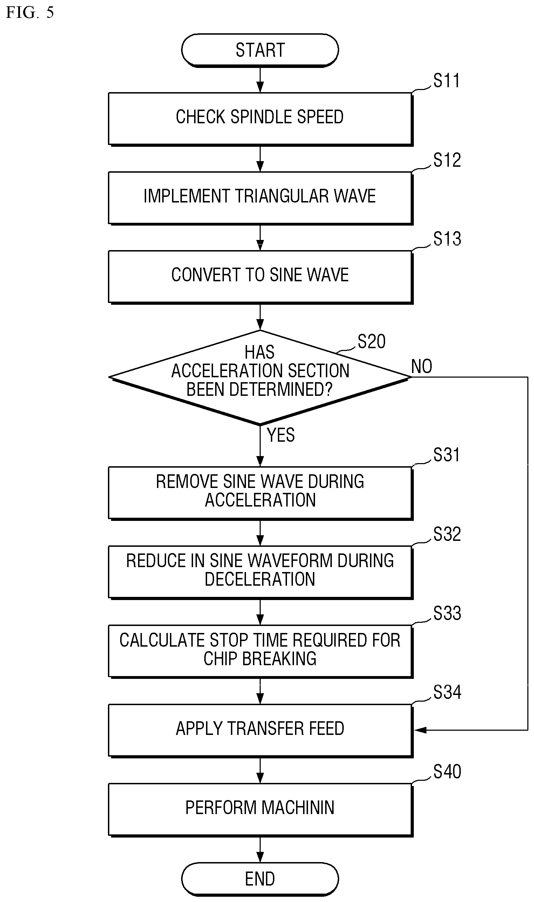

FIG. 4 is a schematic flowchart illustrating process control method for cutting chip segmentation according to an embodiment of the present disclosure. FIG. 5 is a detailed flowchart illustrating the process control method for cutting chip segmentation according to the embodiment of the present disclosure.

Referring to FIGS. 4 and 5, the process control method for cutting chip segmentation according to the embodiment of the present disclosure may include operations for separating an acceleration section and a deceleration section for chip breaking and applying different control algorithms to the acceleration section and the deceleration section. Specifically, the process control method for cutting chip segmentation may include forming a pre-control algorithm (operation S10), determining an acceleration section (operation S20), forming a control algorithm (operation S30), and performing processing according to the control algorithm (operation S40).

First, a pre-control algorithm in the form of a sine waveform may be formed through the speed of a tool, for example, the speed of a spindle (pre-control algorithm forming operation S10).

The forming of the pre-control algorithm (operation S10) may include checking the speed of the spindle (operation S11), implementing a triangular wave (operation S12), and converting the triangular wave into a sine waveform (operation S13).

That is, when the tool, that is, the spindle, is driven according to the driving of the driving unit 130, the calculation unit 110 may check the driving speed of the spindle through various control elements (spindle speed checking operation S11).

The driving speed of the spindle may be implemented as a triangular wave (triangular wave implementation operation S12).

The triangular wave may be converted into a sine waveform (same as a 'sinusoidal wave') (sine waveform conversion operation S13).

After the pre-control algorithm in the form of the sine waveform is formed as described above, the acceleration section and the deceleration section may be separated in the sine waveform to apply a control algorithm in the form of a half-sine waveform.

That is, the acceleration section may be determined in the pre-control algorithm (acceleration section determination operation S20).

After the acceleration section is determined, a control algorithm in the form of a half-sine waveform may be formed by separating the acceleration section and the deceleration section (control algorithm forming operation S30).

The forming of the control algorithm (operation S30) may include producing a feed of the acceleration section (operation S31), producing a feed of the deceleration section (operation S32), calculating a stop time of a stop section (operation S33), and applying a transfer feed (operation S34).

When the acceleration section is determined in the sine waveform of the pre-control algorithm, a sinusoidal wave (sine waveform) of the acceleration section may be removed from the sine waveform to rapidly increase the feed of the acceleration section in a linear form (acceleration section feed producing operation S31).

In addition, when the deceleration section is determined in the sine waveform of the pre-control algorithm, the feed may be smoothed and reduced as it is, that is, in the form of the sine waveform (deceleration section feed producing operation S32).

A rotation value of the tool is input from the sine waveform of the pre-control algorithm, and an optimal stop time required for chip breaking between the acceleration section and the deceleration section is calculated (stop section's stop time calculation operation S33).

In the stop section of the tool, a waveform having a feed of 0 may be formed so that the driving of the tool is stopped. However, depending on the material of the tool, a waveform having a feed of a predetermined value rather than 0 in the stop section may be formed.

Through the above operations, it is possible to form the control algorithm in the form of the half-sine waveform in which the acceleration section, the deceleration section, and the stop section (or minimum speed section) during the processing of the tool are completed.

Once the control algorithm is formed as described above, a transfer feed of the tool may be applied so that the tool can be driven according to the control algorithm (transfer feed application operation S34).

As described above, a control algorithm for cutting chip segmentation may be formed in the form of a half-sine waveform in which an acceleration section and a deceleration section are separated. Therefore, in the acceleration section, processing time can be reduced by accelerating to a speed standard as fast as possible. In the deceleration section, the impact on product roughness can be minimized by applying a smoothing control algorithm.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A process control device for cutting chip segmentation, comprising:
determining an acceleration section in a pre-control algorithm converted into a sine waveform through the speed of a tool,
applying different control algorithms to each of the acceleration section and the deceleration section by separating the acceleration section and a deceleration section for cutting chip segmentation by rapidly increasing a feed in a linear form in the acceleration section, and smoothly reducing the feed in a sine waveform in the deceleration section.

2. The process control device of claim 1, comprising:
a calculation unit comprising one or more control elements for machined chip breaking;
a control unit producing a result value calculated through a calculation algorithm according to the control elements of the calculation unit; and
a driving unit providing driving force for transporting a tool through the result value produced by the control unit,
wherein the control unit separates and dualizes to implement the acceleration section and the deceleration section, and implements a control algorithm completed for chip breaking from the pre-control algorithm implemented according to the driving of the tool.

3. The process control device of claim 2, wherein the control unit comprises:
a deceleration control unit implementing a deceleration algorithm using a smoothing operation calculated through a rotation speed input value of the tool and an NC operation sampling cycle and controlling the feed in the deceleration section to be smoothed and reduced in the sine waveform; and
a deceleration control unit implementing a deceleration algorithm using a smoothing operation calculated through a rotation speed input value of the tool and an NC operation sampling cycle and controlling the feed in the deceleration section to be smoothed and reduced in the sine waveform; and
an acceleration control unit controlling the feed in the acceleration section to rapidly increase in the linear form by rapidly accelerating to a speed standard set in the control algorithm.

4. The process control device of claim 3, wherein the control unit further comprises:
a speed control unit controlling a speed standard set in an algorithm according to a mode of use set by a user to be output; and
a stop control unit calculating a stop time for chip breaking by calculating the time required to stop one rotation according to a spindle rotation speed of the tool.

5. The process control device of claim4, wherein for machined chip breaking, the calculation unit comprises one or more control elements corresponding to the speed control unit, the deceleration control unit, and the stop control unit, respectively.

6. The process control device of claim5, wherein the control elements of the calculation unit comprise:
a speed calculation module implementing calculations through a speed setting and a mode setting of the tool and applying the calculation result to the speed control unit;
a deceleration calculation module implementing calculations through the spindle rotation speed of the tool and the NC operation sampling cycle and applying the calculation result to the deceleration control unit; and
a stop calculation module implementing calculations through the spindle rotation speed and stop setting of the tool and applying the calculation result to the stop control unit.

7. The process control device of claim 4, wherein the acceleration control unit and the deceleration control unit are separated for machined chip breaking to implement the pre-control algorithm in the sine waveform as a control algorithm in a half-sine waveform in the acceleration section and the deceleration section of the tool for chip breaking.

8. The process control device of claim 7, wherein a stop section of the tool occurs between the acceleration section and the deceleration section in the control algorithm in the half-sine waveform, and the driving of the tool is stopped or a waveform having a predetermined speed value is formed in the stop section of the tool depending on a stop setting applied to the stop control unit.

9. The process control device of claim 1, wherein the deceleration control unit obtains the sine waveform of the feed by converting a triangular wave implemented through the speed of the tool.

10. The process control device of claim 9, wherein the acceleration control unit obtains the linear form of the feed of the acceleration section by rapidly increasing the feed by removing the sine waveform.

11. The process control device of claim 1, further comprising a correction unit receiving a result value produced by the control unit and applying the result value to the driving unit, wherein the correction unit receives the result value produced by the control unit and corrects the result value, and the result value corrected by the correction unit is sent to the driving unit and additionally reflected in the driving unit to adjust the driving of the driving unit.

12. A process control method for cutting chip segmentation, comprising:
applying different control algorithms to each of the acceleration section and the deceleration section by separating an acceleration section and a deceleration section for cutting chip segmentation,
forming a pre-control algorithm of a sine waveform through the speed of the tool;
determining the acceleration section in the pre-control algorithm;
if determined to be the acceleration section, rapidly increasing the feed in a linear form in the acceleration section;
smoothly decreasing the feed in a sine-waveform in the deceleration section; and
calculating the optimal stop time required for chip breaking by receiving the rotational value of the tool.

13. The process control method of claim 12, wherein the control algorithm completed form the acceleration section and the deceleration section during the processing of the tool is formed in the shape of a half-sine waveform.

14. The process control method of claim 13, wherein the sine waveform is obtained by converting from a triangular wave implemented through the speed of the tool.

15. The process control method of claim 14, wherein the acceleration section is obtained by rapidly increasing the feed in a linear by removing the sine waveform.

16. The process control method of claim 13, wherein forming of the pre control algorithm, the driving of the tool stops or has a waveform with a predetermined speed value during the stop section of the tool.

17. The process control method of claim 12, wherein the step of forming the pre control algorithm further comprises;
calculating and deriving the optimal stop time required for chip breaking by receiving the rotational value of the tool inputted form the sine waveform of the pre-control algorithm between the acceleration section and the deceleration section.

18. The process control method of claim 17,
wherein the acceleration section and the deceleration section are separated and dualized to implement, implements a control algorithm shape of a half-sine waveform completed for chip breaking from the pre-control algorithm implemented according to the driving of the tool, comprising;
the control unit comprising;
a deceleration control unit controlling the feed in the deceleration section to be smoothed and reduced in the sine waveform, and
an acceleration control unit controlling the feed in the acceleration section to rapidly increase in the linear form; and
wherein for cutting chip segmentation, the calculation unit comprises one or more control elements corresponding to the speed control unit, the deceleration control unit, and the stop control unit, respectively.

19. The process control method of claim 18, wherein the control elements of the calculation unit comprise:
a speed calculation module implementing calculations through a speed setting and a mode setting of the tool and applying the calculation result to the speed control unit;
a deceleration calculation module implementing calculations through the spindle rotation speed of the tool and the NC operation sampling cycle and applying the calculation result to the deceleration control unit; and
a stop calculation module implementing calculations through the spindle rotation speed and stop setting of the tool and applying the calculation result to the stop control unit.

20. The process control method of claim 12, further comprising applying a transfer feed of the tool corresponding to the control algorithm to drive the tool after forming the control algorithm shape of the half-sine waveform control algorithm completed of the acceleration section, the deceleration section, and the stop section.
